# EUROPÄISCHE PATENTSCHRIFT

(11) **EP 2 955 039 B1**
(45) Veröffentlichungstag und Bekanntmachung des Hinweises auf die Patenterteilung: **02.08.2017**
(21) Anmeldenummer: 14172446.8
(22) Anmeldetag: 13.06.2014
(51) Int. Cl.: B60D 1/66

(54) **Aufnahmevorrichtung für Fahrzeuganhänger**
Pickup device for vehicle trailers
Dispositif de réception de remorque de véhicule

(43) Veröffentlichungstag der Anmeldung: 16.12.2015
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- EP-A2- 1 920 995
- WO-A1-83/03590
- WO-A1-2010/094935
- US-A- 3 355 043
- US-A- 3 834 111

## Beschreibung

### Technisches Gebiet

Die vorliegende Erfindung betrifft neuartige Aufnahmeeinrichtungen für Fahrzeuganhänger. Derartige Aufnahmeeinrichtungen dienen einerseits dazu, an einem Fahrgestellrahmen eines Fahrzeuganhängers befestigt zu werden, beispielsweise durch Schweißen oder verschrauben. Andererseits ermöglichen diese Aufnahmeeinrichtungen erstmals, dass der Fahrzeuganhänger durch Hebeeinrichtungen vom Untergrund bzw. Boden angehoben oder wenigstens abgestützt werden kann. Insbesondere ist es mit solchen Aufnahmeeinrichtungen auch erstmals möglich, einen Fahrzeuganhänger insgesamt anzuheben. Alternativ können derartige Aufnahmeeinrichtungen auch dazu eingesetzt werden, Fahrzeuganhänger abzustützen, z.B. bei einem Kippvorgang, d.h. einem Kippen einer Mulde eines Sattelkipperanhängers. Im letzteren Fall sind die Aufnahmeeinrichtungen mit geeigneten Stützmitteln wie Teleskopstützen oder dergleichen auszustatten. Aufnahmeeinrichtungen der hier offenbarten Art sind insbesondere auch als Nachrüstsatz für existierende Fahrzeuganhänger wie Sattelauflieger, Kippsattelauflieger, Seitenkippanhänger und dergleichen verwendbar.

Die vorliegende Erfindung betrifft ferner allgemein Fahrzeuganhänger, die zum Ankuppeln an ein motorisiertes Zugfahrzeug ausgebildet sind und einen Fahrgestellrahmen aufweisen, der in Bezug auf die Fahrtrichtung des Fahrzeuganhängers gesehen eine rechte Rahmenlängsseite und eine linke Rahmenlängsseite aufweist. An dem Fahrgestellrahmen ist wenigstens eine Achse mit Rädern angeordnet. Darüber hinaus ist jeweils wenigstens eine Aufnahmeeinrichtung der vorgenannten Art an der rechten und linken Rahmenlängsseite vorhanden.

### Technischer Hintergrund

Heutzutage werden Fahrzeuganhänger entweder für den Gebrauch auf öffentlichen Straßen oder zur Verwendung in der Landwirtschaft konstruiert. Sind Fahrzeuganhänger mit speziellen Traktionseinrichtungen für den Einsatz in der Landwirtschaft ausgerüstet, so ist ein solcher Fahrzeuganhänger normalerweise nur bedingt straßentauglich. Bedingt straßentauglich heißt hier, dass sie nur unter bestimmten Bedingungen auf Straßen wie öffentlichen Verkehrswegen etc. verwendet werden dürfen. Insbesondere ist möglicherweise deren maximale Betriebsgeschwindigkeit beschränkt.

Umgekehrt besteht das Problem, dass Fahrzeuganhänger, die größere Lasten aufnehmen können und mit höheren Betriebsgeschwindigkeiten wie 80 km/h oder 100 km/h betrieben werden dürfen, eher nicht dafür geeignet sind, auf landwirtschaftlichen Wegen, Äckern, Feldern oder dergleichen eingesetzt zu werden.

Aus der EP 1 920 995 A2 ist ein Hebefahrzeuganhänger bekannt, der zum Ankuppeln an ein motorisiertes Zugfahrzeug und zum Anheben eines Fahrzeuganhängers ausgebildet ist. Ein solcher Hebefahrzeuganhänger umfasst einen Hebefahrgestellrahmen mit einem in Bezug auf die Fahrtrichtung des Fahrzeuganhängers gesehen rechten Rahmenteil und einem linken Rahmenteil, die einen zu der Heckseite des Hebefahrgestellrahmens offenen Aufnahmeraum für den anzuhebenden Fahrzeuganhänger begrenzen. Eine rechte Hebeeinrichtung ist an dem rechten Rahmenteil angeordnet und dazu ausgebildet, mit dem anzuhebenden Fahrzeuganhänger in Eingriff zu gelangen und diesen anzuheben. Eine linke Hebeeinrichtung ist am linken Rahmenteil angeordnet und dazu ausgebildet, mit dem anzuhebenden Fahrzeuganhänger in Eingriff zu gelangen und diesen anzuheben. An dem rechten Rahmenteil ist wenigstens ein rechtes Traktionsmittel vorhanden und an dem linken Rahmenteil ist wenigstens ein linkes Traktionsmittel vorhanden. Traktionsmittel sind beispielsweise Räder, Gummi- oder Stahlraupenketten, Gleisketten etc.

Mit einem Hebefahrzeuganhänger der genannten Art ist es grundsätzlich möglich, einen z.B. an sich für die Straße zugelassenen Fahrzeuganhänger anzuheben, so dass der mittels des Hebefahrzeuganhängers aufgenommene Fahrzeuganhänger auch auf anderen Untergründen wie landwirtschaftlichen Wegen, Forstwegen, Feldern, Äckern etc. verfahren werden kann. Dazu sind dann vorzugsweise an dem Hebefahrzeuganhänger für derartige Untergründe geeignete Traktionsmittel vorhanden. Am hinteren Ende des Fahrgestells des Hebefahrzeuganhängers befinden sich zwei Befestigungsmechanismen. Die eine Querstange am Sattelauflieger umfassen.

Das der Erfindung zu Grunde liegende technische Problem besteht grundsätzlich darin, eine bessere technische Möglichkeit zu schaffen, um zum Befahren von Straßen mit höheren Geschwindigkeiten geeignete Fahrzeuganhänger ohne größere technische Änderungen vornehmen zu müssen, auch auf landwirtschaftlichen Wegen, Feldern oder dergleichen überführen zu können. Ein weiteres zu lösendes Problem mag darin bestehen, eine kostengünstige und einfache Möglichkeit zu schaffen, einen Fahrzeuganhänger abstützen zu können.

### Zusammenfassung der Offenbarung

Ein zur Lösung des genannten technischen Problems geeignetes Bauelement ist eine Aufnahmeeinrichtung für Fahrzeuganhänger gemäß Anspruch 1. Mittels dieser technischen Lösung ist es erstmals möglich, bereits in Betrieb befindliche Fahrzeuganhänger derart nachzurüsten, dass sie durch geeignete Hebemittel eines beispielsweise in der genannten EP 1 920 995 A2 offenbarten Hebefahrzeuganhängers anhebbar sind.

Bei der Erfindung ist das Lagerelement am zugehörigen Befestigungselement schwenkbar angeordnet. Durch das Verschwenken von der Fahrbetriebsstellung in die Anhebestellung gelangt das Lagerelement in Bezug auf die Außenkontur des Anhängers in eine solche Stellung, dass es durch geeignete Hebemittel ergreifbar ist und dann der Fahrzeuganhänger anhebbar ist. Eine Aufnahmeeinrichtung ist beispielsweise in Längsrichtung des Fahrzeuganhängers gesehen zwischen zwei Rädern zu platzieren. Es können auch jeweils mehrere Aufnahmeeinrichtungen auf einer Rahmenseite des anzuhebenden Fahrzeuganhängers vorhanden sein. Das Befestigungselement weist eine Führungsnut auf, in der ein am zugehörigen Lagerelement befindlicher Bolzen verschiebbar geführt ist. Dadurch ist in der Anhebebetriebsstellung über den Bolzen eine Kräfteübertragung des Gewichts des Fahrzeuganhängers auf das Hebemittel möglich, ohne dass weitergehende Maßnahmen zu treffen sind. Insbesondere ist das der Fall, wenn die Führungsnut eine geschlossene Kontur aufweist, in der in Anhebebetriebsstellung der Bolzen an einen Nutende in Formschluss ist. Das Lagerelement ist an dem zugehörigen Befestigungselement über einen Lagerbolzen drehbar befestigt Damit ist eine einfache und äußerst stabile Ausgestaltung einer Aufnahmeeinrichtung möglich und gleichzeitig ein "Verstauen" des Lagerelements für den Fahrbetrieb erzielbar.

Falls der Lagerbolzen in Breitenrichtung des Fahrgestellrahmens gesehen weiter außen angeordnet ist als die Führungsnut, ist eine einfache und kostengünstige Ausgestaltung einer Aufnahmeeinrichtung möglich, bei der auch größere Kräfte, wie sie bei größeren Fahrzeuganhängern auftreten können, übertragbar sind.

Eine weitere beispielhafte Ausführungsform einer Aufnahmeeinrichtung sieht vor, dass das Lagerelement in der Fahrbetriebsstellung verriegelbar ist. Beispielsweise ist die Verriegelung durch einen entsprechenden Riegel oder Bolzen oder dergleichen möglich und ein versehentliches Ausschwenken des Lagerelements gegenüber dem Befestigungselement kann zuverlässig vermieden werden.

Eine einfache und zugleich sehr stabile Konstruktion ist gegeben, wenn die Aufnahmeeinrichtung ein Befestigungselement aufweist, das aus zwei plattenartigen Teilen besteht, zwischen denen ein Lagerelement beweglich gelagert ist.

Eine einfache und kostengünstige Version einer Aufnahmeeinrichtung sieht vor, dass das Lagerelement wenigstens ein Loch aufweist, in das ein hakenförmiges Element eines Hebemittels einführbar ist. Durch die Kombination hakenförmiges Hebemittel und wenigstens einem Loch ist eine stabile und zugleich einfache Ausgestaltung der Kraft-Formschlussverbindung zwischen Hebemittel und anzuhebendem Fahrzeuganhänger ermöglicht.

Eine Alternative sieht vor, dass eine Aufnahmeeinrichtung ein Lagerelement aufweist, das wenigstens ein hakenförmiges Bauteil umfasst, das in ein Loch eines Hebemittels einführbar ist.

Weitere Alternativen können vorsehen, dass als Lagerelement rohrförmige oder plattenartige Teile vorhanden sind, die mit entsprechenden Gegenstücken am Hebemittel in Kontakt gelangen.

Eine weitere beispielhafte Ausgestaltung einer Aufnahmeeinrichtung sieht vor, dass in der Anhebebetriebsstellung die Aufnahmeeinrichtung derart vom Fahrgestellrahmen auskragt, dass es in Breitenrichtung des Fahrgestellrahmens gesehen weiter außen ist, als der an dieser Rahmenseite vorhandene wenigstens eine Reifen. Damit wird gewährleistet, dass ein auf beiden Seiten des anzuhebenden Fahrzeuganhängers anzuordnendes Hebemittel unmittelbar und einfach mit der Lagereinrichtung in Kontakt gelangen kann, um dann den Fahrzeuganhängeranzuheben.

In einer weiteren beispielhaften Ausführungsform ist das Hebemittel fest an der Aufnahmeeinrichtung angebracht und in der Fahrbetriebsstellung so weit verschwenkt, dass es nicht mit dem Boden in Kontakt gelangt. In ausgeschwenktem Zustand kann es aber dann zu Abstützzwecken mit dem Untergrund in Kontakt gelangen. So ist es beispielsweise möglich bekannte (Teleskop-)Stützen schwenkbar zu lagern.

Eine weitere Ausgestaltung der vorliegenden Erfindung besteht darin, einen Fahrzeuganhänger, der zum Ankuppeln an ein motorisiertes Zugfahrzeug ausgebildet ist, dahingehend zu modernisieren, dass an einer rechten Rahmenlängsseite und einer linken Rahmenlängsseite jeweils wenigstens eine Aufnahmeeinrichtung der hier offenbarten Art vorhanden ist. Die Aufnahmeeinrichtungen sind von einer Fahrbetriebsstellung in eine Anhebebetriebsstellung überführbar und derart ausgebildet sind, dass sie in der Anhebebetriebsstellung ein Ergreifen und Anheben des gesamten Fahrzeuganhängers durch an der rechten und linken Rahmenlängsseite anordbare Hebemittel ermöglichen. Dabei kommen die Räder wenigstens einer an den Fahrgestellrahmen geordneten Achse außer Kontakt mit dem Boden und, wenn die Hebemittel an einem weiteren Hebefahrzeuganhänger angeordnet sind, wird ein Transportieren des Fahrzeuganhängers über den Hebefahrzeuganhänger auf anderem Untergrund ermöglicht.

Ferner kann es auch zweckdienlich sein, seitlich an den rechten und linken Rahmenlängsseiten Führungselemente vorzusehen, um ein Heranführen eines Hebefahrzeuganhängers an den anzuhebenden Fahrzeuganhänger zu erleichtern. Derartige Führungselement in Form von beispielsweise Platten oder dergleichen ermöglichen ein automatisches Korrigieren der Ausrichtung des Hebefahrzeuganhängers, wenn dieser seitlich außen an den Rahmenlängsseiten entlang geführt wird.

### Kurze Beschreibung der Zeichnungen

Im Folgenden werden anhand der beigefügten Zeichnungen beispielhafte Ausführungsformen der vorliegenden Erfindung näher beschrieben und erläutert. Es zeigen:
Fig. 1 eine schematische Perspektivansicht einer ersten beispielhaften Ausführungsform eines Hebefahrzeuganhängers, der zum Aufnehmen eines erfindungsgemäßen Fahrzeuganhängers ausgebildet ist,
Fig. 2 eine weitere schematische perspektivische Ansicht der beispielhaften Ausführungsform eines Hebefahrzeuganhängers nach Fig. 1,
Fig. 3 eine Detailansicht eines Vorderteils einer beispielhaften Ausführungsform eines Hebefahrzeuganhängers, der an einen Traktor angehängt ist,
Fig. 4 eine weitere schematische perspektivische Ansicht des in Fig. 3 gezeigten Vorderteils des Hebefahrzeuganhängers,
Fig. 5 eine schematische Teilansicht eines rechten Rahmenteils eines Hebefahrzeuganhängers,
Fig. 6 eine Seitenansicht einer an einem Fahrzeuganhänger angebrachten Aufnahmeeinrichtung gemäß einer beispielhaften Ausführungsform der vorliegenden Erfindung,
Fig. 7 eine Frontalansicht der in Fig. 6 gezeigten Aufnahmeeinrichtung,
Fig. 8 eine perspektivische Ansicht der in den Fig. 6 und 7 gezeigten Aufnahmeeinrichtung gemäß der vorliegenden Erfindung,
Fig. 9 eine schematische perspektivische Ansicht einer Aufnahmeeinrichtung, wie sie in den Fig. 6 bis 8 gezeigt ist, die durch eine Hebeeinrichtung ergriffen ist,
Fig. 10 eine andere perspektivische Ansicht der in Fig. 9 gezeigten ergriffenen Aufnahmeeinrichtung,
Fig. 11 eine weitere perspektivische Ansicht der in den Fig. 9 und 10 gezeigten Aufnahmeeinrichtung,
Fig. 12 eine perspektivische Ansicht eines Hebefahrzeuganhängers, der an einen Traktor angehängt ist,
Fig. 13 eine schematische Seitenansicht des Hebefahrzeuganhängers an einem Traktor, wie in Fig. 12 gezeigt,
Fig. 14 eine schematische perspektivische Ansicht eines in den voranstehenden Fig. gezeigten Hebefahrzeuganhängers, wie er an einen Sattelauflieger von vorne herangeführt wird,
Fig. 15 eine weitere perspektivische Ansicht der Heranführsituation gemäß der Fig. 14,
Fig. 16 eine perspektivische Detailansicht einer Aufnahmeeinrichtung gemäß der vorliegenden Erfindung, die den hochgehobenen Fahrzeuganhänger zeigt.

### Detaillierte Beschreibung

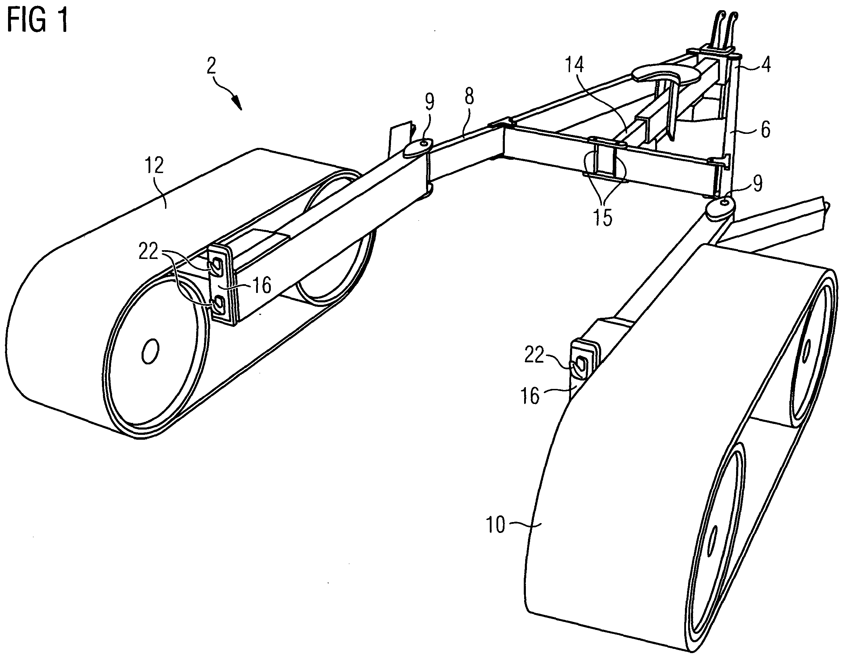

Die Fig. 1 zeigt eine erste beispielhafte Ausführungsform eines Hebefahrzeuganhängers 2, der im Wesentlichen aus einem Deichselvorderteil 4 und einem rechten Rahmenteil 6 und einem linken Rahmenteil 8 besteht. An den rechten und linken Rahmenteilen 6 und 8 sind Traktionseinrichtungen 10 und 12 in Form von Gummiraupenketten vorhanden. Die gezeigten Traktionseinrichtungen 10 und 12 können auch in Form von Rädern, Stahlraupenketten oder anderen, insbesondere im landwirtschaftlichen Bereich bekannten Traktionseinrichtungen realisiert sein.

Die Rahmenteile 6 und 8 sind im vorliegenden Ausführungsbeispiel an Gelenken 9 gelenkig unterteilt, so dass der Abstand des zwischen den Rahmenteilen 6 und 8 gebildeten Zwischenraums, der zur Heckseite hin offen ist, leicht veränderbar ist, in dem hier nicht gezeigte Stellzylinder betätigt werden.

Eine Zugstange 14 ist beweglich gelagert und wiederum über Gelenke 15 mit den Rahmenteilen 6 und 8 verbunden.

An den hinteren Enden der Rahmenteile 6 und 8 befinden sich Haken 22. Diese Haken 22 dienen dazu, in noch zu erläuternde Aufnahmeeinrichtungen 100 an einem Fahrzeuganhänger 101 eingehängt zu werden. Im vorliegenden Ausführungsbeispiel sind an jedem Rahmenteil 6, 8 zwei übereinander angeordnete Hakenelemente 22 vorhanden. Es ist selbstverständlich aber auch möglich, hier Lochplatten oder andere Greif- oder Anlagemittel vorzusehen, in die dann an einem Fahrzeuganhänger 101, der mittels dieses Hebefahrzeuganhängers 2 angehoben werden soll, vorhandene Hakenelemente eingreifen.

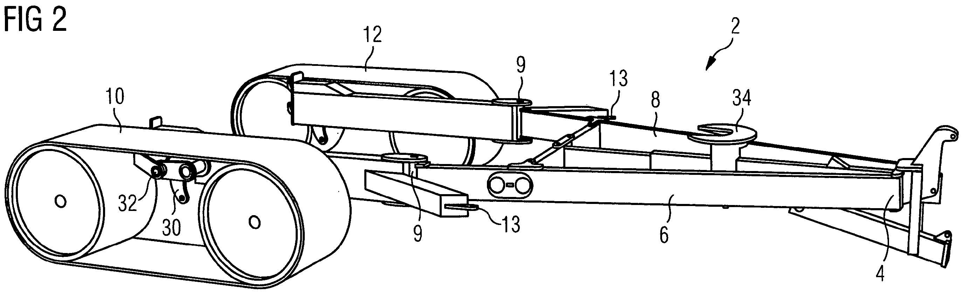

In der Fig. 2 ist der in der Fig. 1 gezeigte Hebefahrzeuganhänger 2 aus einer anderen Perspektive gezeigt. Hier ist insbesondere noch deutlicher zu erkennen, dass der Hebefahrzeuganhänger 2 eine Sattelplatte 34 aufweist, die im vorliegenden Ausführungsbeispiel mit einem Königszapfen eines aufzunehmenden Sattelaufliegers 101 zu koppeln ist. Dann kann durch Bewegen des Hebels 30 und eines Gelenkmechanismus 32, der an jedem Rahmenteil 6, 8 des Hebefahrzeuganhängers 2 vorhanden ist, das Rahmenteil gegenüber den Traktionseinrichtungen 10, 12 in der Höhe vertikal verstellt werden. Hierdurch wird also die Höhe eines Hakens 22 gegenüber dem Untergrund verändert.

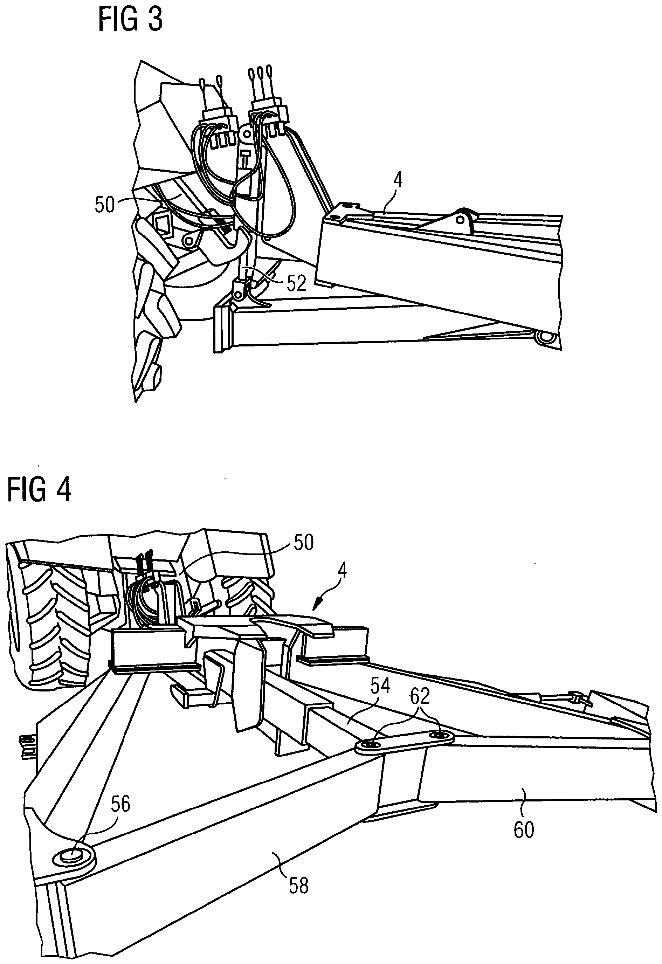

Die Fig. 3 und 4 zeigen weitere Details eines Vorderteils des in den Fig. 1 und 2 gezeigten Hebefahrzeuganhängers 2. Insbesondere ist in der Fig. 3 ersichtlich, dass ein hydraulischer Hubzylinder 52 vorhanden ist, der es ermöglicht, durch Ein- und Ausfahren die Höhe des Deichselvorderteils 4 des Hebefahrzeuganhängers 2 zu verändern. Damit ist beispielsweise bei aufgenommener Last eine Horizontalstellung des Hebefahrzeuganhängers 2 wieder herstellbar. Im vorliegenden Beispiel ist das Vorderteil 4 mit einem Traktor 50 gekoppelt.

Die Fig. 4 zeigt eine weitere perspektivische Ansicht des Vorderteils 4 des Hebefahrzeuganhängers 2, wie er in den vorangehenden Fig. gezeigt wurde. Hier ist über Gelenke 56, Teile 58, 60 und Gelenke 62 die Zugstange 54 angelenkt.

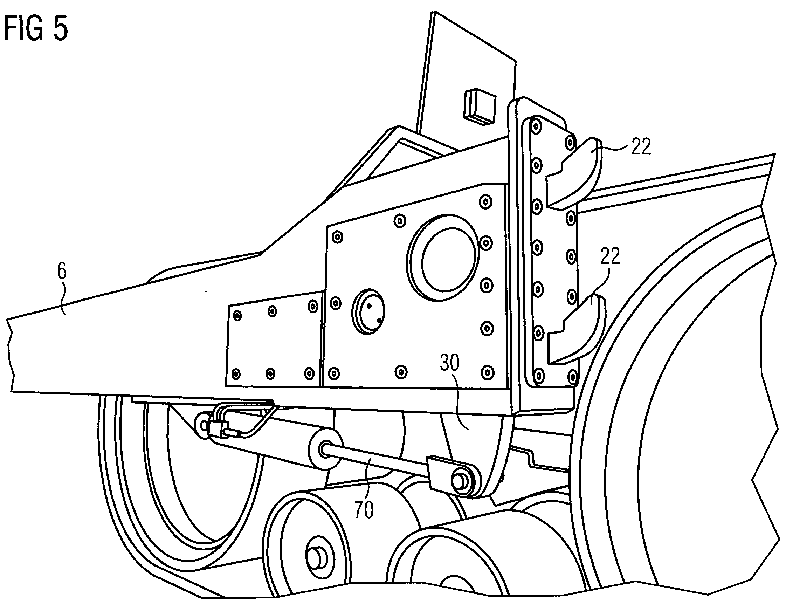

Die Fig. 5 zeigt eine Teilansicht des hinteren Teils des Rahmenteils 6 des Hebefahrzeuganhängers 2. Hier sind insbesondere die Haken 22 ersichtlich und insbesondere ist ein Hubzylinder 70 gezeigt, der zur Verstellung des Hebels 30 dient.

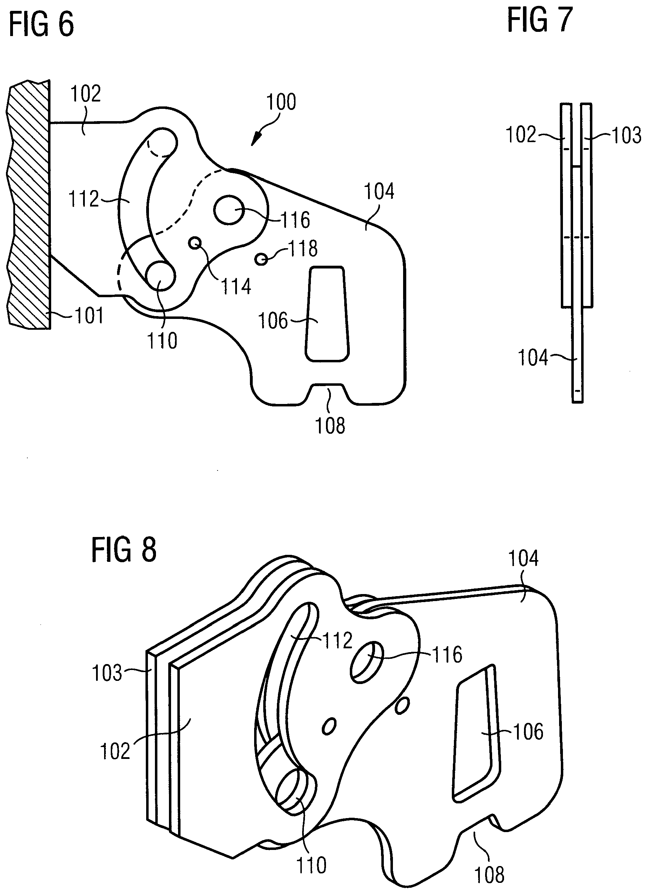

In den Fig. 6 bis 8 ist eine beispielhafte Ausführungsform einer Aufnahmeeinrichtung 100 gezeigt. Hier ist am Rahmen 101 eines Fahrzeuganhängers das Befestigungselement 102 angeschweißt. Hier besteht das Befestigungselement aus zwei plattenartigen Teilen 102 und 103, die zwischen sich einen Abstand aufweisen. In dem durch die plattenartigen Teile 102 und 103 gebildeten Spalt ist ein Lagerelement 104 beweglich gelagert. Das Lagerelement 104 ist um einen Bolzen 160 schwenkbar, und zwar von einer Fahrbetriebsstellung in eine wie in der Fig. 6 gezeigte Anhebebetriebsstellung. In der Anhebebetriebsstellung ist eine Öffnung 106 im Lagerelement 104 soweit vom Rahmen 101 des Fahrzeuganhängers, der anzuheben ist, beabstandet, dass bei der Aufnahme in oder beim Ergreifen in die Öffnung 106 mittels Haken 22 ein Bolzen 110, der mit dem Lagerelement 104 fest verbunden ist, als Anschlag in einer Nut 112 in den plattenartigen Teilen 102, 103 dient.

In der Fahrbetriebsstellung ist das Lagerelement 104 um den Drehbolzen 116 nach innen verschwenkt und die Löcher 114, 118 sind in Überdeckung und können durch einen Stift, hier nicht gezeigt, fluchtend gehalten werden, wodurch das Lagerelement 104 in seiner Fahrbetriebsstellung, als in der nach innen verschwenkten Position, fixiert ist.

Anzumerken ist, dass das Lagerelement 104 im vorliegenden Fall eine Öffnung 106 zur Aufnahme oder Ergreifen durch ein Hakenelement 22 aufweist, ferner ist eine Vertiefung 108 am unteren Rand vorhanden, an der ein zweites Hakenelement 22 mit dem ausgeschwenkten Lagerelement 104 in Kontakt gelangen kann. Selbstverständlich ist es auch möglich, anstatt der Öffnung oder des Lochs 106 und der Mulde oder Vertiefung 108 ein oder mehrere hakenförmige Elemente vorzusehen, die dann in komplementäre Öffnungen an den Rahmenteilen des Hebefahrzeuganhängers eingreifen können.

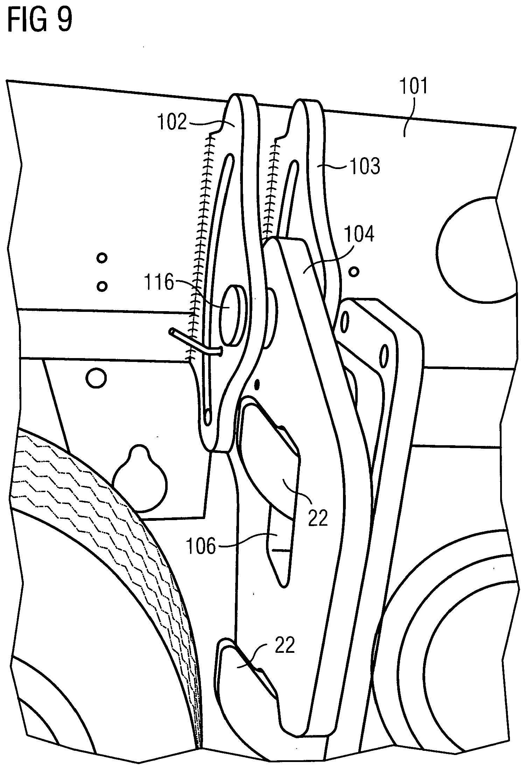

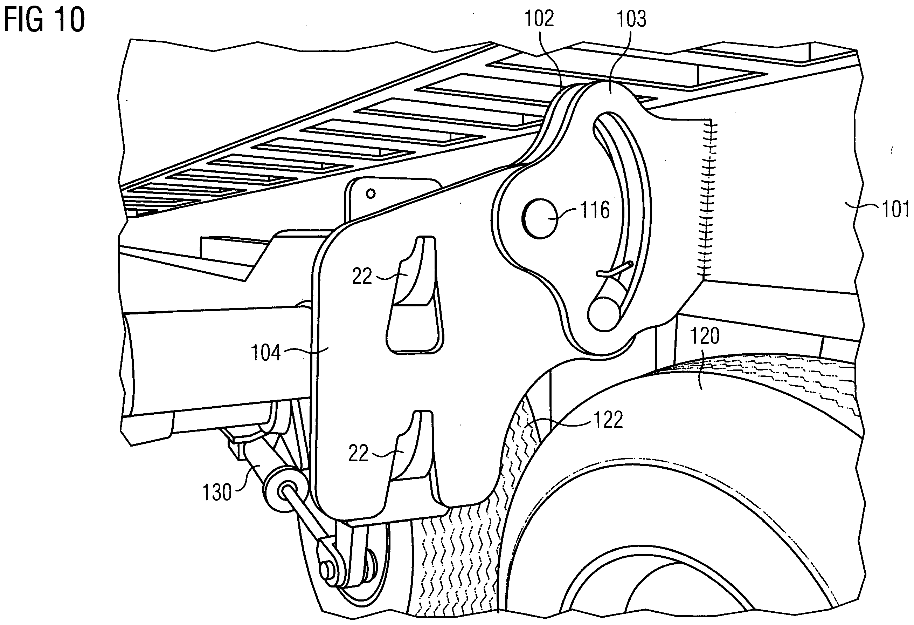

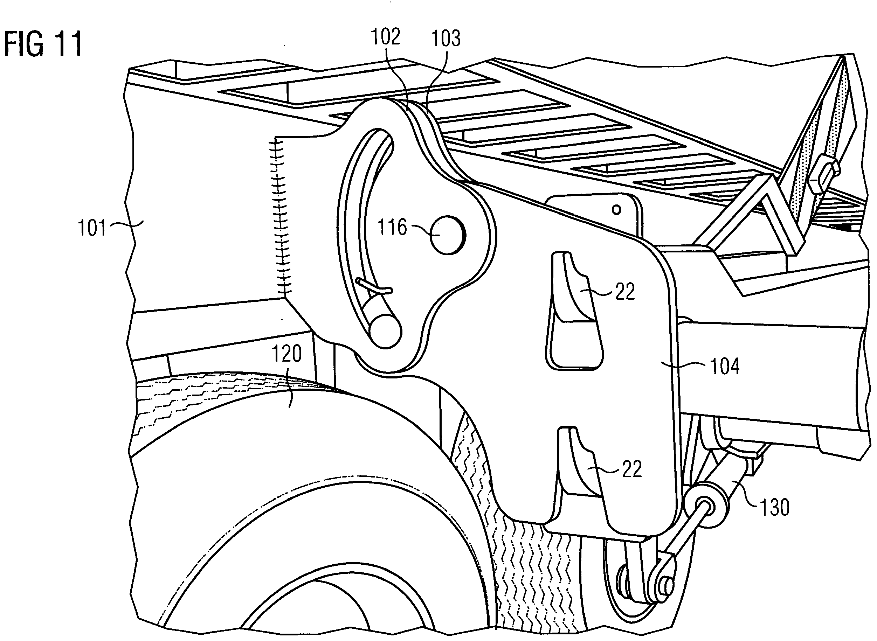

In der Fig. 9 ist eine perspektivische Ansicht einer Aufnahmeeinrichtung 100 in ausgeschwenktem Zustand gezeigt, das heißt, das Lagerelement 104 befindet sich in der Anhebebetriebsstellung. Wie in Fig. 9 ersichtlich, sind zwei hakenförmige Elemente 22 des Hebefahrzeuganhängers mit dem Lagerelement 104 in Eingriff. Wie aus der Darstellung gemäß den Fig. 10 und 11 ersichtlich, kann nun durch Betätigen des Hydraulikzylinders 130 der an den Aufnahmeeinrichtungen 100, die sich rechts und links an entsprechenden Rahmenteilen 101 des Fahrzeuganhängers, der anzuheben ist, befinden, angehoben werden.

### Gewerbliche Anwendbarkeit

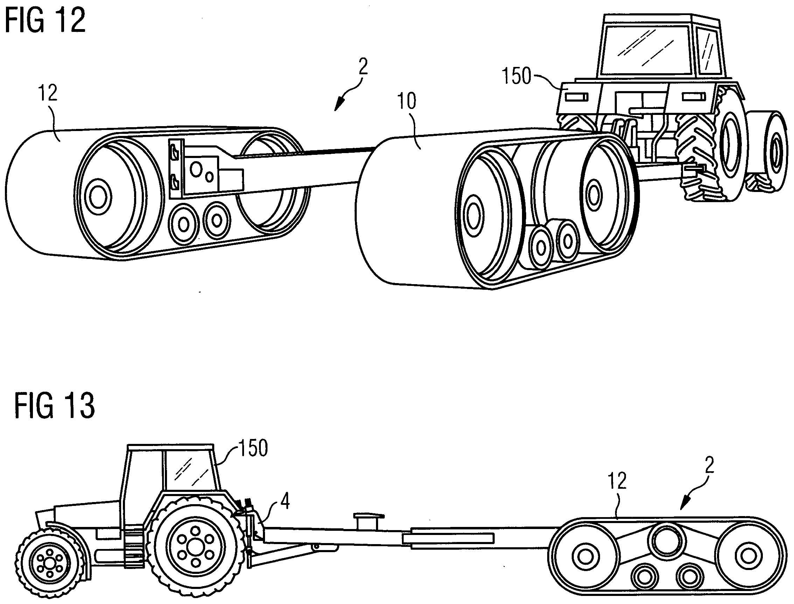

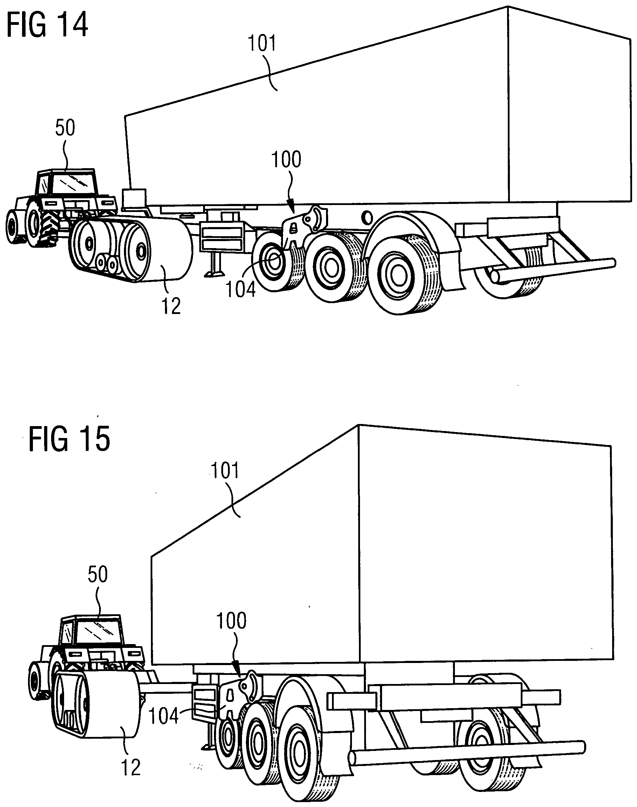

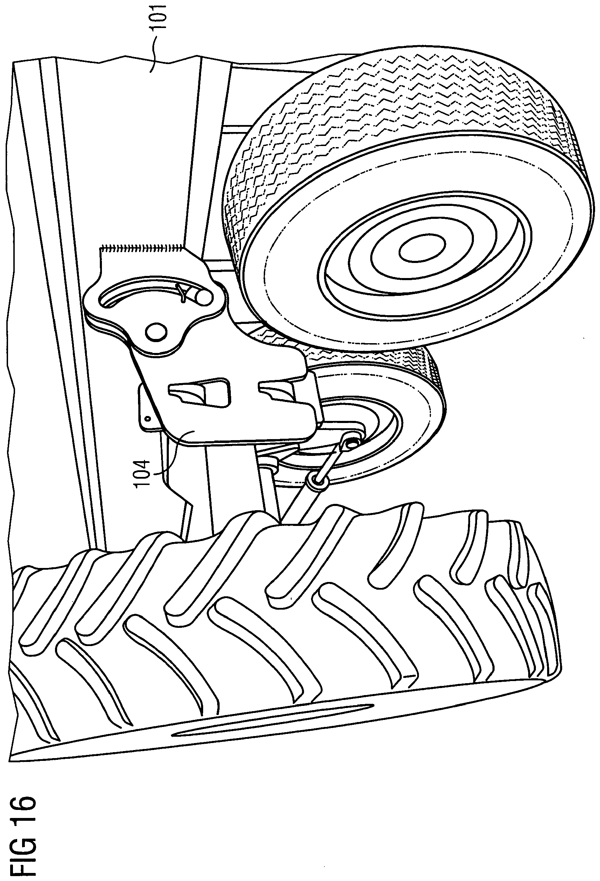

Ein Anhebevorgang ist anhand der Fig. 12 bis 16 veranschaulicht. Wie in der Fig. 12 gezeigt, kann der Hebefahrzeuganhänger 2, der hier beispielsweise über einen Traktor 50 bewegt wird, mit dem zur Heckseite offenen Aufnahmerum an einen Fahrzeuganhänger 101 herangeführt werden. Sobald die hakenförmigen Elemente 22 an den Enden der Rahmenteile 6 und 8 des Hebefahrzeuganhängers 2 platziert sind, und die Lagerelemente 104 der Aufnahmeeinrichtungen ausgeschwenkt sind, kann dann durch Betätigen des Hubzylinders 130 der gesamte Fahrzeuganhänger 101 angehoben werden. In angehobenem Zustand, d.h. "Huckepack" auf dem Hebefahrzeuganhänger 2, ist der Fahrzeuganhänger 101 somit bereit, auf einem Untergrund wie ein Acker, Feld oder dergleichen gefahren zu werden, für den der Fahrzeuganhänger 101 eigentlich nicht ausgelegt ist..

Aufgrund der erfindungsgemäßen Ausgestaltung eines Fahrzeuganhängers 101 ist es erstmals möglich, Fahrzeuganhänger 101 wie Sattelauflieger, Kippsattelauflieger, Seitenkipper oder dergleichen, die für den Straßenverkehr vorgesehen sind, nunmehr auch auf Felder oder Äcker zu verfahren. Damit ist es landwirtschaftlichen Betrieben ermöglicht, unter Schonung des Bodens auf Äckern, Feldern oder dergleichen ohne Umzuladen Güter auf Felder zu transportieren, für die normalerweise ein Umladevorgang auf geeignete Anhänger des landwirtschaftlichen Verkehrs notwendig ist.

## Patentansprüche

1. Aufnahmeeinrichtung (100) für Fahrzeuganhänger, die dazu ausgebildet ist, an einem Fahrgestellrahmen eines Fahrzeuganhängers (101) befestigt zu werden, mit:
- einem am Fahrgestellrahmen starr anzubringenden Befestigungselement (102, 103), das eine Führungsnut (112) aufweist, und
- einem am Befestigungselement (102, 103) mittels eines Lagerbolzens (116) schwenkbar angeordneten Lagerelement (104), das von einer Fahrbetriebsstellung in eine Anhebebetriebsstellung überführbar ist und in der Anhebebetriebsstellung ein Ergreifen und Anheben des Fahrzeuganhängers (101) durch an einer rechten und linken Rahmenlängsseite anordbare Hebemittel (22) erlaubt, wobei sich an dem Lagerelement (104) ein Bolzen (110) befindet, der in der Führungsnut (112) des Befestigungselementes (102, 103) verschiebbar geführt ist.

2. Aufnahmeeinrichtung (100) nach Anspruch 1, bei dem der Lagerbolzen (116) in Breitenrichtung des Fahrgestellrahmens gesehen weiter außen angeordnet ist als die Führungsnut (112).

3. Aufnahmeeinrichtung (100) nach einem der voranstehenden Ansprüche, bei dem das Lagerelement (104) in der Fahrbetriebsstellung verriegelbar ist.

4. Aufnahmeeinrichtung (100) nach einem der voranstehenden Ansprüche, bei dem ein Befestigungselement aus zwei plattenartigen Teilen (102, 103) besteht, zwischen denen ein Lagerelement (104) beweglich gelagert ist.

5. Aufnahmeeinrichtung (100) nach einem der voranstehenden Ansprüche, bei dem ein Lagerelement (104) wenigstens ein Loch (106) aufweist, in das ein hakenförmiges Element (22) eines Hebemittels einführbar ist.

6. Aufnahmeeinrichtung (100) nach einem der voranstehenden Ansprüche, bei dem ein Lagerelement (104) wenigstens ein hakenförmiges Bauteil aufweist, das in ein Loch eines Hebemittels einführbar ist.

7. Aufnahmeeinrichtung (100) nach einem der voranstehenden Ansprüche, bei dem eine Aufnahmeeinrichtung (100) in der Anhebebetriebsstellung derart vom Fahrgestellrahmen seitlich auskragt, dass es in Breitenrichtung des Fahrgestellrahmens gesehen weiter außen als das an dieser Rahmenseite vorhandene wenigstens eine Rad (120) des Fahrzeuganhängers (101) ergreifbar ist.

8. Aufnahmeeinrichtung (100) nach einem der voranstehenden Ansprüche, bei dem ein Hebemittel wie eine Stütze fest an der Aufnahmeeinrichtung (100) angebracht ist.

9. Fahrzeuganhänger (101), der zum Ankuppeln an ein motorisiertes Zugfahrzug ausgebildet ist, mit:
- einem Fahrgestellrahmen mit einer in Bezug die Fahrtrichtung des Fahrzeuganhängers (101) gesehen rechten Rahmenlängsseite und einer linken Rahmenlängsseite,
- wenigstens einer an dem Fahrgestellrahmen angeordneten Achse mit Rädern (120),
- jeweils wenigstens einer Aufnahmeeinrichtung (100) an der rechten und linken Rahmenlängsseite, wobei jede Aufnahmeeinrichtung (100) ein am Fahrgestellrahmen starr angebrachtes Befestigungselement (102, 103) und ein am Befestigungselement (102, 103) beweglich angeordnetes Lagerelement (104) umfasst, das von einer Fahrbetriebsstellung in eine Anhebebetriebsstellung überführbar ist und derart ausgebildet ist, dass in der Anhebebetriebsstellung ein Ergreifen und Anheben des Fahrzeuganhängers (101 durch an der rechten und linken Rahmenlängsseite anordbare Hebemittel (22) durchführbar ist.

## Claims

1. A mounting device (100) for vehicle trailers, which is adapted to be mounted to a chassis frame of a vehicle trailer (101), comprising:
- a fastening component (102, 103) to be fixedly attached to a chassis frame, the fastening element having a guiding groove (112), and
- a supporting element (104) pivotably attached to the fastening component (102, 103) by means of a bearing pin (116), which supporting element can be transferred from a driving mode position to a lifting mode position and, in the lifting mode position, allows for engaging and lifting the vehicle trailer (101) by lifting means (22) that can be arranged at right and left longitudinal sides of the frame, wherein a pin (110), which is slidably supported in the guiding groove (112) of the fastening component (102, 103), is arranged on the supporting element (104).

2. The mounting device (100) of claim 1, wherein, when viewed in the width direction of the chassis frame, the bearing pin (116) is arranged further outwards than the guiding groove (112).

3. The mounting device (100) of one of the preceding claims, wherein the supporting element (104) is lockable in the driving mode.

4. The mounting device (100) of one of the preceding claims, wherein a fastening component consists of two plate-like components (102, 103) with a supporting element (104) movably arranged therebetween.

5. The mounting device (100) of one of the preceding claims, wherein the supporting element (104) comprises at least one hole (106), into which a hook-shaped component (22) of a lifting means can be introduced.

6. The mounting device (100) of one of the preceding claims, wherein a supporting element (104) comprises at least one hook-shaped component, which can be introduced in a hole of a lifting means.

7. The mounting device (100) of one of the preceding claims, wherein, in the lifting mode position, a mounting device (100) laterally projects from the chassis frame such that, when viewed in the width direction of the chassis frame, it is engagable further outwards than the at least one wheel (120) arranged on this side of the chassis frame of the vehicle trailer (101).

8. The mounting device (100) of one of the preceding claims, wherein a lifting means like a prop is fixedly attached to the mounting device (100).

9. A vehicle trailer (101) adapted to be coupled to a powered towing vehicle, comprising:
- a chassis frame comprising a right and a left longitudinal side of the chassis frame, viewed with respect to the driving direction of the vehicle trailer (101),
- at least one axle with wheels (120) arranged on the chassis frame,
- at least one mounting device (100) arranged on the right and left longitudinal side, respectively, of the chassis frame, each mounting device (100) comprising a fastening component (102, 103) fixedly attached to the chassis frame, and a supporting element (104) movably arranged on the fastening component (102, 103), which supporting element can be transferred from a driving mode position to a lifting mode position and is configured such that, in the lifting mode position, engaging and lifting of the vehicle trailer (101) can be effected by lifting means (22) that can be arranged on the right and left longitudinal sides of the chassis frame.

## Revendications

1. Dispositif de réception (100) pour des remorques de véhicule, qui est réalisé afin d'être fixé sur un cadre de châssis d'une remorque de véhicule (101), avec :
- un élément de fixation (102, 103) à monter rigidement sur le cadre de châssis, qui présente une rainure de guidage (112), et
- un élément de palier (104) agencé de manière pivotante sur l'élément de fixation (102, 103) à l'aide d'un boulon de palier (116) qui peut être transféré d'une position de mode de roulement dans une position de mode de levage et permet dans la position de mode de levage une saisie et un levage de la remorque de véhicule (101) par des moyens de levage (22) pouvant être agencés sur un côté longitudinal de cadre droit et gauche, dans lequel un boulon (110) se trouve sur l'élément de palier (104), lequel est guidé de manière mobile dans la rainure de guidage (112) de l'élément de fixation (102, 103).

2. Dispositif de réception (100) selon la revendication 1, pour lequel le boulon de palier (116) est agencé plus à l'extérieur vu dans le sens de largeur du cadre de châssis que la rainure de guidage (112).

3. Dispositif de réception (100) selon l'une des revendications précédentes, pour lequel l'élément de palier (104) peut être verrouillé dans la position de mode de roulement.

4. Dispositif de réception (100) selon l'une des revendications précédentes, pour lequel un élément de fixation se compose de deux parties de type plaque (102, 103), entre lesquelles un élément de palier (104) est logé de manière mobile.

5. Dispositif de réception (100) selon l'une des revendications précédentes, pour lequel un élément de palier (104) présente au moins un trou (106), dans lequel un élément en forme de crochet (22) d'un moyen de levage peut être introduit.

6. Dispositif de réception (100) selon l'une des revendications précédentes, pour lequel un élément de palier (104) présente au moins un composant en forme de crochet qui peut être introduit dans un trou d'un moyen de levage.

7. Dispositif de réception (100) selon l'une des revendications précédentes, pour lequel un dispositif de réception (100) surplombe latéralement dans la position de mode de levage le cadre de châssis de telle manière qu'il puisse être saisi vu dans le sens de la largeur du cadre de châssis plus vers l'extérieur que l'au moins une roue (120) présente sur ce côté de cadre de la remorque de véhicule (101).

8. Dispositif de réception (100) selon l'une des revendications précédentes, pour lequel un moyen de levage est monté tel qu'un appui fixement sur le dispositif de réception (100).

9. Remorque de véhicule (101) qui est réalisée pour le couplage à un véhicule tracteur motorisé avec :
- un cadre de châssis avec un côté longitudinal de cadre droit vu dans le sens de déplacement de la remorque de véhicule (101) et un côté longitudinal de cadre gauche,
- au moins un essieu agencé sur le cadre de châssis avec des roues (120),
- respectivement au moins un dispositif de réception (100) sur le côté longitudinal de cadre droit et gauche, dans lequel chaque dispositif de réception (100) comporte un élément de fixation (102, 103) monté de manière rigide sur le cadre de châssis et un élément de palier (104) agencé de manière mobile sur l'élément de fixation (102, 103) qui peut être transféré d'une position de mode de roulement dans une position de mode de levage et est réalisé de telle manière que dans la position de mode de levage, une saisie et un levage de la remorque du véhicule (101) puissent être réalisés par des moyens de levage (22) pouvant être agencés sur le côté longitudinal de cadre droit et gauche.
